(19) Europäisches Patentamt
European Patent Office
Office européen des brevets

(11) **EP 4 167 137 A1**

(12) **EUROPEAN PATENT APPLICATION**

(43) Date of publication:
**19.04.2023 Bulletin 2023/16**

(51) International Patent Classification (IPC):
**G06N 3/04** *(2023.01)*     **G06N 3/08** *(2023.01)*

(21) Application number: **22181294.4**

(52) Cooperative Patent Classification (CPC):
**G06N 3/08; G06N 3/045**

(22) Date of filing: **27.06.2022**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **18.10.2021 CN 202111212317**

(71) Applicant: **BEIJING BAIDU NETCOM SCIENCE TECHNOLOGY CO., LTD.**
**Beijing 100085 (CN)**

(72) Inventors:
• **WANG, Longchao**
  **Beijing, 100085 (CN)**
• **SUN, Yipeng**
  **Beijing, 100085 (CN)**
• **YAO, Kun**
  **Beijing, 100085 (CN)**
• **HAN, Junyu**
  **Beijing, 100085 (CN)**
• **LIU, Jingtuo**
  **Beijing, 100085 (CN)**
• **DING, Errui**
  **Beijing, 100085 (CN)**

(74) Representative: **V.O.**
**P.O. Box 87930**
**2508 DH Den Haag (NL)**

(54) **MODEL DETERMINATION METHOD AND APPARATUS, ELECTRONIC DEVICE AND MEMORY**

(57) The present disclosure provides a model determination method and apparatus, an electronic device and a memory, and relates to the technical field of artificial intelligence, in particular to the field of computer visions and deep learning. The present disclosure can be applied to image processing, image identification and other scenarios. A specific implementation solution includes: an image sample and a text sample are acquired, wherein text data in the text sample is used for performing text description to target image data in the image sample; at least one image feature in the image sample is stored to a first queue, and at least text feature in the text sample is stored to a second queue; the first queue and the second queue are trained to obtain a first target model; and the first target model is determined as an initialization model for a second target model. The technical problem of low efficiency of training of an initialization model is solved.

Fig. 1A

An image sample and a text sample are acquired, wherein text data in the text sample is used for performing text description to target image data in the image sample — S102

At least one image feature in the image sample are stored to a first queue, and at least one text feature in the text sample are stored to a second queue — S104

The first queue and the second queue are trained to obtain a first target model — S106

The first target model is determined as an initialization model for a second target model — S108

## Description

## Technical Field

The present disclosure relates to the technical field of artificial intelligence, and in particular, to the fields of computer visions and deep learning. The present disclosure can be applied to image processing, image identification and other scenarios, and specifically relates to a model determination method and apparatus, an electronic device and a memory.

## Background

At present, in image-text training, contrastive loss is usually used for training an initialization model. However, this requires lots of computing resources to train a model, and much time is spent, so that training indicators of the initialization model are low.

## Summary

The present disclosure provides a model determination method and apparatus, an electronic device and a memory.

According to one aspect of the present disclosure, a model determination method is provided. The method may include: an image sample and a text sample are acquired, wherein text data in the text sample is used for performing text description to target image data in the image sample; at least one image feature is stored in the image sample to a first queue, and at least one text feature is stored in the text sample to a second queue; the first queue and the second queue are trained to obtain a first target model; and the first target model is determined as an initialization model for a second target model.

According to one aspect of the present disclosure, another model determination method is also provided. The method may include: a model training request to a server is sent, wherein the model training request includes an image sample and a text sample, and text data in the text sample is used for performing text description to target image data in the image sample; and receiving an initialization model sent by the server in response to the model training request, wherein the initialization model is obtained by the server that stores at least one image feature in the image sample to a first queue, stores at least one text feature in the text sample to a second queue, and trains the first queue and the second queue.

According to one aspect of the present disclosure, an image processing method is provided. The method may include: at least one image to be processed is acquired; the at least one image to be processed is input into a second target model, wherein the second target model is obtained by a model determination method according to an embodiment of the present disclosure; and a processing result of the second target model is acquired.

According to another aspect of the present disclosure, a model determination apparatus is also provided. The apparatus may include: a first acquisition component, configured to acquire an image sample and a text sample, wherein text data in the text sample is used for performing text description to target image data in the image sample; a first storage component, configured to store at least one image feature in the image sample to a first queue, and store at least one text feature in the text sample to a second queue; a training component, configured to train the first queue and the second queue to obtain a first target model; and a determination component, configured to determine the first target model as an initialization model for a second target model.

According to another aspect of the present disclosure, another model determination apparatus is also provided. The apparatus may include: a sending component, configured to send a model training request to a server, wherein the model training request includes an image sample and a text sample, and text data in the text sample is used for performing text description to target image data in the image sample; and a receiving component, configured to receive an initialization model sent by the server in response to the model training request, wherein the initialization model is obtained by the server that stores at least one image feature in the image sample to a first queue, stores at least one text feature in the text sample to a second queue and trains the first queue and the second queue.

According to another aspect of the present disclosure, an image processing apparatus is also provided. The apparatus may include: a second acquisition component, configured to acquire at least one image to be processed; a first input component, configured to input the at least one image to be processed into a second target model, wherein the second target model is obtained by a model determination method according to an embodiment of the present disclosure; and a third acquisition component, configured to acquire a processing result of the second target model.

According to another aspect of the present disclosure, an electronic device is also provided. The electronic device may include at least one processor; and a memory in communication connection with the at least one processor, wherein the memory stores an instruction that is able to be executed by the at least one processor; and the instruction, when executed by the at least one processor, causes the at least one processor to implement the model determination method of the embodiment of the present disclosure.

According to another aspect of the present disclosure, a non-transitory computer-readable storage medium which stores a computer instruction, wherein the computer instruction is used for causing a computer to implement the model determination method of the embodiment of the present disclosure.

It should be understood that the content described in this section is not intended to identify key or important features of the embodiments of the present disclosure, nor is it intended to limit the scope of the present disclosure. Other features of the present disclosure will be easily understood through the following specification.

## Brief Description of the Drawings

The accompanying drawings are used to better understand the present disclosure, and do not constitute limitations to the present disclosure. wherein

Fig. 1A is a flow chart of a model determination method according to an embodiment of the present disclosure;

Fig. 1B is a flow chart of another model determination method according to an embodiment of the present disclosure;

Fig. 1C is a flow chart of an image processing method according to an embodiment of the present disclosure;

Fig. 2 is a schematic diagram of a image-text pre-training system based queue technology according to an embodiment of the present disclosure;

Fig. 3 is a schematic structural diagram of a Deit model according to an embodiment of the present disclosure;

Fig. 4A is a schematic diagram of a queue module according to an embodiment of the present disclosure;

Fig. 4B is a schematic diagram of matching between an image feature and a text feature according to an embodiment of the present disclosure;

Fig. 5A is a schematic diagram of a model determination apparatus according to an embodiment of the present disclosure;

Fig. 5B is a schematic diagram of another model determination apparatus according to an embodiment of the present disclosure;

Fig. 5C is a schematic diagram of an image processing apparatus according to an embodiment of the present disclosure;

Fig. 6 is a schematic block diagram of an electronic device according to an embodiment of the present disclosure.

## Detailed Description of the Embodiments

Exemplary embodiments of the present disclosure are described below with reference to the accompanying drawings, which include various details of the embodiments of the present disclosure to facilitate understanding and should be considered as exemplary only. Accordingly, a person of ordinary skill in the art will recognize that various changes and modifications of embodiments described herein can be made without departing from the scope and spirit of the present disclosure. Also, descriptions of well-known functions and structures are omitted from the following description for clarity and conciseness.

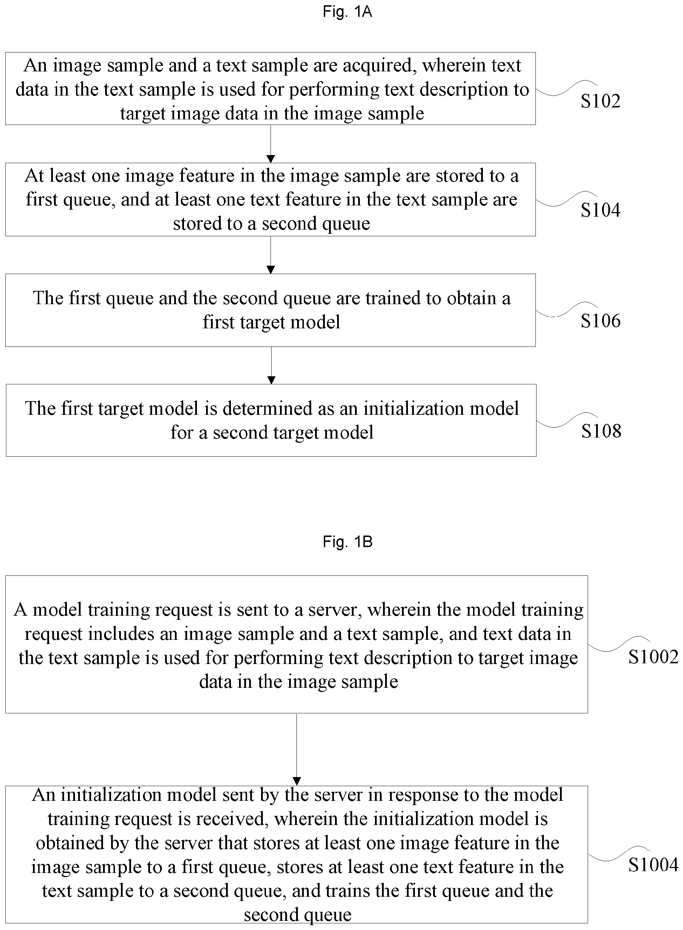

Fig. 1A is a flow chart of a model determination method according to an embodiment of the present disclosure. As shown in Fig. 1A, the method may include the following steps.

At step S102, an image sample and a text sample are acquired, wherein text data in the text sample is used for performing text description to target image data in the image sample.

In the technical solution provided by the above step 102 of the present disclosure, the text data in the text sample is used for performing the text description on the target image data in the image sample.

The model determination method of this embodiment is a model determination method for image-text pre-training. Image-text pre-training requires a large amount of data. In this embodiment, the image sample and the text sample can be acquired as training samples. The text sample and the image sample are corresponding. The text sample can include a large amount of text data, and the image sample can include a large amount of image data. The image data can be for at least one picture. The text data can be used for performing text description on target image data in the large amount of image data in the image sample. That is to say, the text data in the text sample and the target image data in the image sample are correspondence. The text data in the text sample and the corresponding target image data can also be referred to as an image-text pair.

Optionally, in this embodiment, the above-mentioned image sample and text sample may be crawled by an Internet crawler.

Optionally, the above-mentioned image sample and text sample in this embodiment may not be required to be manually labeled and cleaned, so as to save labor cost.

At step S104, at least one image feature in the image sample are stored to a first queue, and at least one text feature in the text sample are stored to a second queue.

In the technical solution provided in the above step 104 of the present disclosure, after the image sample and the text sample are acquired, at least one image feature in the image sample is stored to the first queue, and at least one text feature in the text sample is stored to the second queue. The first queue and the second queue may be collectively referred to as image and text dual queues.

Contrastive loss in the image-text pre-training is dependent on its capability of mining information negative contrast. In order to collect enough information negative contrast from minibatch, a dual-queue module is provided in this embodiment, including the first queue and the second queue. In this embodiment, the at least one image feature of the image sample can be first acquired. The image sample can be input into an image encoder, and the at least one image feature is extracted from the image sample through the image encoder. For example, the at least one image feature may be $I_1$, $I_2$, ..., $I_N$, which are stored to the first queue, that is to say, the first queue of this embodiment is an image feature queue. Optionally, the number of the at least one image feature stored in the first queue of this embodiment is limited. When the first queue is insufficient to store at least one new image feature, the earliest stored at least one image feature can be deleted from the first queue, so as to clear a space for storage of the at least one new image feature, thus an object of recording and updating the at least one image feature through the first queue to improve training speed and at least one model indicator (at least one training indicator) of an initialization model is achieved. The model indicator is indicator used for expressing a training effect of the initialization model.

Optionally, the above image encoder of this embodiment can use a data efficient image transformer (Deit) model to extract the at least one image feature. That is to say, the Deit applies a transformer from natural language processing (NLP) to computer vision (CV).

In this embodiment, the at least one text feature of the text sample can also be acquired. The text sample can be input into a text encoder, and the at least one text feature is extracted from the text sample through the text encoder. The at least one text feature may be $T_1$, $T_2$, ..., $T_N$, which are stored to the second queue. That is to say, the second queue of this embodiment is a text feature queue. Optionally, the number of the at least one text feature stored in the second queue of this embodiment is limited. When the second queue is insufficient to store at least one new text feature, the earliest stored at least one text feature can be deleted from the second queue, so as to clear a space for storage of the at least one new text feature, thus an object of recording and updating the at least one text feature through the second queue to improve the training speed and the at least one model indicator of the initialization model is achieved.

Optionally, the above-mentioned text encoder of this embodiment may use a RoBERTa model to extract the at least one text feature. The RoBERTa model is an upgrade based on a language representation model (BERT). In terms of specific details for the BERT, an optimization function is improved. In terms of a training strategy, a dynamic mask mode is used to train a model, which proves deficiency of a next sentence prediction (NSP) training strategy and adopts a larger batch size. In addition, in terms of data, on the one hand, a larger data set is used, and on the other hand, byte-pair encoding (BPE) is used to process the text data.

At step S106, the first queue and the second queue are trained to obtain a first target model.

In the technical solution provided in the above step 106 of the present disclosure, after the at least one image feature in the image sample are stored to the first queue, and the at least one text feature in the text sample are stored to the second queue, the first queue and the second queue are trained to obtain the first target model.

In this embodiment, the first queue and the second queue can be trained. Optionally, the first queue, the at least one image feature of a current batch in the image sample, the second queue, and the at least one text feature of a current batch in the text sample are subjected to contrastive learning and training through a contrastive learning model to equivalently increase a batchsize, thus saving computing resources and also improving the at least one model indicator of the initialization model. The current batch refers to a batch currently used for performing batch training on the at least one image feature in the image sample.

At step S108, the first target model is determined as an initialization model for a second target model.

In the technical solution provided in the above step 108 of the present disclosure, after the first queue and the second queue are trained to obtain the first target model, the first target model can be determined as an initialization model for the second target model.

In this embodiment, the first target model is determined as the initialization model for the second target model. The initialization model is trained to obtain the second target model. The second target model may be an image detection model, an image segmentation model, an image classification model and the like.

It should be noted that the above-mentioned second target model of this embodiment being the image detection model, the image segmentation model, the image classification model and the like is only an example of the embodiment of the present disclosure, and does not mean that the second target model of the embodiment of the present disclosure is only the image detection model, the image segmentation model and the image classification model. Any model that can be obtained by training the initialization model falls within the scope of this embodiment, and descriptions thereof are omitted here.

Through the above-mentioned step S102 to step S108 of the present application, the image sample and the text sample are acquired, wherein the text data in the text sample is used for performing text description on the target image data in the image sample; the at least one image feature in the image sample is stored to the first queue, and the at least one text feature in the text sample is stored to a second queue; the first queue and the second queue are trained to obtain the first target model; and the first target model is determined as the initialization model for the second target model. That is to say, the pre-training of this embodiment adopts two queues to respectively store the at least one image feature and the at least one text feature and applies the two queues to train the initialization model, so that lots of computing resources can be saved, the technical problem of low efficiency of training of the initialization model can be solved, and the technical effect of improving the efficiency of training of the initialization model can be achieved.

The above-mentioned method of this embodiment will be further described below.

As an optional implementation, the step S106 that the first queue and the second queue are trained to obtain the first target model includes: multiple negative samples are determined based on the first queue and the second queue; and the multiple negative sample is trained to obtain the first target model.

In this embodiment, when the first queue and the second queue are trained to obtain the first target model, the multiple negative samples can be acquired based on the first queue and the second queue, and then be trained, so that the multiple negative samples can participate in loss calculation to obtain the first target model. Lots of computing resources are saved, thus the training speed and at least one training indicator of the initialization model is improved. The training indicator is indicator used for expressing a training effect on the initialization model.

As one optional implementation, the multiple negative samples include a first negative sample and the second negative sample. The multiple negative samples are determined based on the first queue and the second queue includes: a first negative sample is determined based on the first queue and the at least one text feature; and a second negative sample is determined based on the second queue and the at least one image feature.

In this embodiment, after the at least one image feature in the image sample is stored to the first queue, the first negative sample can be determined based on the first queue and the at least one text feature. This can be that the first queue and at least one text feature in a target batch sample in the text sample form the first negative sample, and the above-mentioned negative samples include the first negative sample. Optionally, the at least one text feature in the text sample is stored to the second queue. This can be that the second queue and the at least one image feature in a target batch sample in the image sample form a second negative sample. The above-mentioned negative samples include the second negative sample. The second negative sample and the first negative sample participate in the loss calculation. The number of the negative samples has great impact on the training effect of the initialization model, so that greatly increasing the number of the negative samples by the above method can improve the training speed and the at least one model indicator of the initialization model.

As an optional implementation, the first negative sample is determined based on the first queue and the text features includes: the first negative sample is determined based on the first queue and the at least one text feature of a current batch sample in the text sample.

In this embodiment, determining the first negative sample based on the first queue and the at least one text feature may be acquiring the at least one text feature of the current batch sample in the text sample, that is to say, the at least one text feature is acquired in the current batch, and the first negative sample is formed by the first queue and the at least one text feature of the current batch sample, so as to increase the number of the negative samples.

As an optional implementation, the second negative sample is determined based on the second queue and the at least one image feature includes: the second negative sample is determined based on the second queue and the at least one image feature of a current batch sample in the image sample.

In this embodiment, determining the second negative sample based on the second queue and the image features may be acquiring the at least one image feature of the current batch sample in the image sample, that is to say, the at least one image feature is acquired in the current batch, and the second negative sample is formed by the second queue and the at least one image feature of the current batch sample, so as to increase the number of the negative samples.

As an optional implementation, the multiple negative samples are trained to obtain the first target model includes: multiple image features are matched with multiple text features in the negative sample to obtain multiple match results and multiple unmatch results, wherein each of the multiple match results include at least one image feature and at least one text feature which are matched with each other successfully, and each of the multiple unmatch results include the at least one image feature and the at least one text feature which are matched with each other unsuccessfully; at least one model parameter is determined based on the multiple match results and the multiple unmatch results; and the first target model is determined based on the at least one model parameter.

In this embodiment, training the multiple negative samples to obtain the first target model may be respectively matching the multiple image features with the multiple text features in the negative samples. For example, the multiple image features may be $I_1$, $I_2$, ..., $I_N$, and the multiple text features may be $T_1$, $T_2$, ..., $T_N$. The above-mentioned $I_1$, $I_2$, ..., $I_N$ and $T_1$, $T_2$, ..., $T_N$ are matched to obtain multiple match results and multiple unmatch results. Each of the multiple match results may include at least one image feature and at least one text feature which are successfully matched with each other, such as $I_1 \cdot T_1$, $I_2 \cdot T_2$... ...$I_N \cdot T_N$. Each of the multiple unmatch results may include at least one image feature and at least one text feature which are matched with each other unsuccessfully, such as $I_1 \cdot T_2$, $I_1 \cdot T_3$......$I_1 \cdot T_N$, $I_2 \cdot T_1$, $I_2 \cdot T_3$......$I_2 \cdot T_N$.

After the above-mentioned multiple match results and multiple unmatch results are determined, the at least one model parameter can be determined based on the multiple match results and the multiple unmatch results. Optionally, this embodiment is achieved by using a loss function (InfoNCE loss), and using the multiple match results and the multiple unmatch results. For example, it is achieved by the following formula:

$$loss = -log\left(\frac{exp(x_i)}{\sum_j exp(x_j)}\right)$$

wherein, $x_i$ is used for representing a probability that a network output result belongs to an $i^{th}$ class; and $x_j$ is used for representing a probability that the network output result belongs to a $j^{th}$ class. Optionally, in this embodiment, the above $exp(x_i)$ can be used for representing the multiple match results of matching between the multiple image features and the multiple text features, and $\sum_j exp(x_j)$ can be used for representing the multiple unmatch results between the multiple image features and the multiple text features.

Therefore, in this embodiment, after the first queue and the second queue are added, which is equivalent to increasing the negative samples of infoNCEloss, lots of computing resources can be saved.

After the at least one model parameter is determined, in this embodiment, the first target model can be generated through the at least one model parameter.

Optionally, the above contrastive learning model of this embodiment may mainly be used for generating the first target model with InfoNCEloss.

As an optional implementation, the image sample includes noisy image data and/or the text sample includes noisy text data.

In this embodiment, the image-text pre-training requires a large amount of data. The image sample and the text sample acquired allows a certain amount of noisy data. The image sample may include the noisy image data, and the text sample may include the second noisy text data. That is to say, in this embodiment, the noisy image data in the image sample and the noisy text data in the text sample cannot be partially processed, so as to save the labor cost.

As an optional implementation, the image sample is an unlabeled image sample and/or the text sample is an unlabeled text sample.

In this embodiment, a large number of unlabeled text data and image data can be used as training samples, and manual labeling and cleaning are not required, so as to save the labor cost. Thus, the at least one text feature is extracted from a large number of unlabeled text data through the text encoder and is stored to the second queue, and the at least one image feature is extracted from a large number of unlabeled image data through the image encoder and is stored to the first queue, so as to train the first queue and the second queue to obtain the initialization model.

Fig. 1B is a flow chart of another model determination method according to an embodiment of the present disclosure. As shown in Fig. 1B, the method may include the following steps.

At step S1002, a model training request is sent to a server, wherein the model training request includes an image sample and a text sample, and text data in the text sample is used for performing text description to target image data to the image sample.

In the technical solution provided in the above step 1002 of the present disclosure, in order to obtain an initialization model with high accuracy of initialization by training, a large number of image data and text data is required to be used for training, so that data volume and computation burden in an entire training process are larger. In order to reduce resource consumption of user equipment (UE) (such as a smart phone, a tablet, a notebook, a laptop and a personal computer), the server can be used for training a model, and only a trained model is deployed in the UE to facilitate user's use.

In this embodiment, the above-mentioned model training request can be generated according to a model use need of the user. The model training request includes the image sample and the text sample that are required to be processed, and can also include at least one expected processing result and the like.

Optionally, in this embodiment, a graphical user interface can be provided on the UE. The user inputs a model training request in an input region of the graphical user interface, so that the UE can send the model training request to the server through a network. For higher pertinence, the server can provide different model training solutions for the user in response to a type of the user, and the user makes a choice in the input region, so that the UE can generate a model training request according to a choice result of the user and sends the model training request to the server through the network.

At step S1004, an initialization model sent by the server in response to the model training request is received, wherein the initialization model is obtained by the server that stores at least one image feature in the image sample to a first queue, stores at least one text feature in the text sample to a second queue, and trains the first queue and the second queue.

In the technical solution provided in the above step 1004 of the present disclosure, the server being in response to the model training request, which can refer to that the server first acquires the at least one image feature of the image sample. The image sample can be input to the image encoder, and the at least one image feature can be extracted from the image sample through the image encoder and is stored to the first queue. Optionally, when the first queue is insufficient to store at least one new image feature, the server can delete the earliest stored at least one image feature from the first queue, so as to clear a space for storage of the at least one new image feature, thus the object of recording and updating image features through the first queue to improve the training speed and the at least one model indicator of the initialization model is achieved.

The server of this embodiment can also acquire the at least one text feature of the text sample. The server can input the text sample into the text encoder, extract the at least one text feature from the text sample through the text encoder, and store the at least one text feature to the second queue. Optionally, when the second queue is insufficient to store at least one new text feature, the server can delete the earliest stored at least one text feature from the second queue, so as to clear a space for storage of the at least one new text feature, thus the object of recording and updating text features through the second queue to improve the training speed and the at least one model indicator of the initialization model is achieved.

After the server stores the at least one image feature in the image sample to the first queue and stores the at least one text feature in the text sample to the second queue, the server can train the first queue and the second queue. Optionally, the first queue, the at least one image feature of the current batch in the image sample, the second queue, and the at least one text feature of the current batch in the text sample are subjected to contrastive learning and training through a contrastive learning model to equivalently increase a batchsize, thus the initialization model is obtained. In this way, computing resources are saved, and the at least one model indicator of the initialization model can also be improved.

Further, in order to greatly reduce the computation burden of the UE, a trained initialization model can be directly deployed in the server. The UE is connected to the server through a specific interface and sends a model acquisition request to the server via the network. The UE acquires, via the network, the initialization model sent by the server in response to the model acquisition request, and takes the initialization model as an initialization model for a second target model, thus a model pre-training objective is achieved.

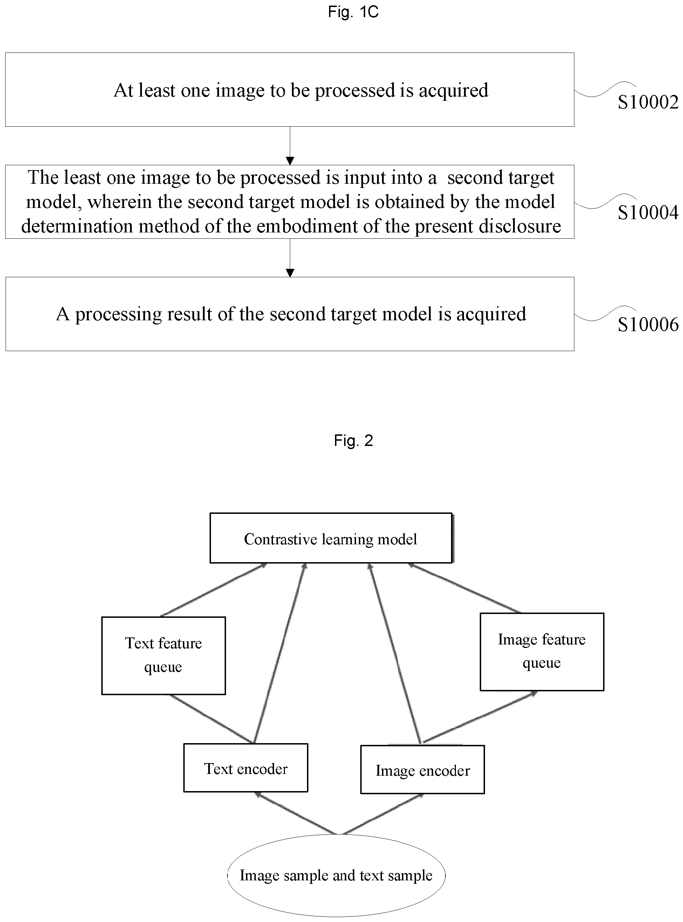

Fig. 1C is a flow chart of an image processing method according to an embodiment of the present disclosure. As shown in Fig. 1C, the method may include the following steps:
At step S10002, at least one image to be processed is acquired.

In the technical solution provided in the above step 10002 of the present disclosure, the at least one image to be processed may be an image to be subjected to image processing, such as at least one image to be subjected to image detection, image segmentation, image classification and image identification. The processing type can be flexibly determined according to an image application scenario, such as according to a road scenario, an education scenario, a vegetation growth prediction scenario and a weather prediction scenario, which is not specifically limited here.

Optionally, in this embodiment, the at least one image to be processed can be collected through an image collection device. For example, the at least one image to be processed is collected through at least one camera deployed in a certain space.

At step S10004, the at least one image to be processed is input into a second target model, wherein the second target model is obtained by the model determination method of the embodiment of the present disclosure.

In the technical solution provided in the above step 10004 of the present disclosure, a first target model is determined as an initialization model for the second target model, the first target model is obtained by training a first queue and a second queue, the first queue is used for storing at least one image feature in a image sample, the second queue is used for storing at least one text feature in a text sample, and text data in the text sample is used for performing text description to target image data in the image sample. The collected the at least one image to be processed can be input into the second target model. Optionally, the second target model of this embodiment is obtained by training the initialization model, and the initialization model can be obtained by storing the at least one image feature of the image sample to the first queue, storing the at least one text feature in the text sample to the second queue, and training the first queue and the second queue. The text data in the text sample is used for performing text description on the target image data in the image sample. For example, the initialization model can be a cyclic neural network model, which is not specifically limited here.

Optionally, in this embodiment, training the initialization model to obtain the second target model may be pre-collecting a large amount of sample data, wherein the sample data can include a large number of image data which can be labeled to obtain multiple labels. The multiple labels may be related to image processing such as image detection, image segmentation, image classification and image identification. The initialization model is then trained according to the sample data and the corresponding multiple labels to obtain the second target model.

Optionally, in this embodiment, in the sample data, features of each piece of sample data can be extracted through a convolutional neural network to obtain a feature vector including multiple features. For example, the feature vector includes at least one feature related to the above-mentioned labels. When the initialization model is trained through the feature vector and the corresponding multiple labels, at least one target parameter can be obtained. The at least one target parameter can be optimization parameter of a model. The second target model can be determined through the at least one target parameter and the initialization model.

Optionally, in this embodiment, the sample data can be preprocessed according to a distribution consistency algorithm, a denoising algorithm and other algorithms, and the preprocessed data is then subjected to feature extraction, feature transformation, feature normalization, feature combination and the like to obtain at least one feature used for training the initialization model. Optionally, in this embodiment, the at least one feature can also be further processed through an optimization algorithm, a hypothesis function, a loss function, a decision boundary, a convergence speed, an iteration strategy and the like, and the initialization model is trained through the at least one processed feature to obtain the second target model.

Optionally, in this embodiment, after acquiring the second target model, the second target model can also be subjected to cross validation, target estimation, overfitting, underfitting and the like, thus a final second target model is determined. Image detection, image segmentation, image classification, image identification and other processing are achieved through the second target model.

At step S10006, a processing result of the second target model is acquired.

In the technical solution provided in the above step 10006 of the present disclosure, the second target model can be used for processing the at least one image to be processed, such as, the second target model can be used for performing image detection, image segmentation, image classification and image identification on the at least one image to be processed, so as to obtain a processing result. The processing result can include an image detection result, an image segmentation result, an image classification result, an image identification result and the like, and the processing result is then output. For example, the image detection result, the image segmentation result, the image classification result, the image identification result and the like are displayed through the graphical user interface, so as to further analyze these results.

In this embodiment, pre-training is optimized by queue-technology based the image-text pre-training, and the at least one image and the at least one text feature are saved for calculation of infonceloss. After the image and text dual queues are added, it is equivalent to adding negative samples of the infoNCEloss, that is to say, the dual-queue technology is equivalent to increasing the batchsize, which can save lots of computing resources. Furthermore, the at least one model indicator of the initialization model can be provided, so that the technical problem of low efficiency of training of the initialization model is solved, and the technical effect of improving the efficiency of training of the initialization model is achieved.

The above technical solution of the embodiment of the present disclosure is further exemplified below in combination with preferable implementations.

In the related art, the image-text pre-training requires a large number of image-text data and lots of computing resources. The image-text pre-training can adopt contrastive loss. The number of the negative samples has great impact on the effect of the model, so that a larger batchsize indicates a better effect of the model. However, an increase of the batchsize means a need for a larger video memory. Furthermore, the image-text pre-training in the related art requires lots of computing resources such as GPU, and training time is extremely long; and pre-trained model indicators are lower, which are required to be constantly improved by an optimization solution.

In addition, a model is trained using lots of computing resources during the image-text pre-training in the related art, such as a large number of tensor processing units (TPUs) and distributed processers. Furthermore, it takes long time to perform the pre-training in the related art; the training process is also very long; and the at least one model indicator is to be improved.

For the above problems, in this embodiment, the dual-queue technology is used to equivalently increase the batchsize, so that training resources are saved, and the at least one model indicator can also be improved. The above-mentioned method of this embodiment will be further described below.

Fig. 2 is a schematic diagram of a image-text pre-training system based queue technology according to an embodiment of the present disclosure. As shown in Fig. 2, a large number of image data and text data (Noisy Product Image-Text Data) are collected. The image sample include at least one picture, and the text sample include text data corresponding to the at least one picture. The image-text pre-training of this embodiment requires a large amount of data and can allow certain noise. In this embodiment, a large number of unlabeled text data and image data can be used as training samples, and manual labeling and cleaning are not required. The image samples are input into the image encoder to extract the at least one image feature of the image sample, and the at least one image feature is stored to the image feature queue; the corresponding text sample are input into the image encoder to extract the at least one text feature of the text sample, and the at least one text feature is stored to the text feature queue, thus performing contrastive learning on the image feature queue, the at least one image feature in the current batch, the text feature queue and the at least one text feature in the current batch through a contrastive learning model to obtain the initialization model.

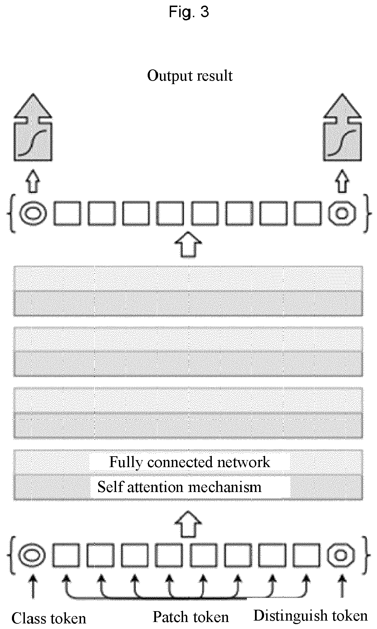

In this embodiment, the above-mentioned text encoder extracts the at least one text feature with a RoBERTa model. The RoBERTa model is an upgrade based on a BERT model. The image encoder extracts the at least one image feature with a Deit model. As shown in Fig. 3, Fig. 3 is a schematic structural diagram of a Deit model according to an embodiment of the present disclosure. By means of inputting a class token, patch tokens and a distinguish token of data, an obtained output result can be used for obtaining the at least one image feature via processing by a self attention mechanism and a fully connected network (FFN). The Deit of this embodiment applies a transformer from an NLP to CV.

In this embodiment, the contrastive loss in the image-text pre-training is very dependent on its capability of mining the information negative contrast. In order to collect enough information negative contrast from each minibatch, two queues are added in the present disclosure, which are respectively used for storing the at least one image feature and the at least one text feature. In the entire training process, embedding of example actually changes at a relatively low speed. Based on such a phenomenon, the present disclosure provides a cross-batch processing internal memory module to record and update deep characteristics of latest minibatch processing, so that at least one information example can be mined via cross-minibatch processing, and the training speed and the at least one model indicator are improved. The latest minibatch processing means that a length of a queue is fixed. In response to that the number of currently stored at least one feature reaches the length of the queue, the earliest stored at least one feature in the queue will be abandoned to store at least one new feature.

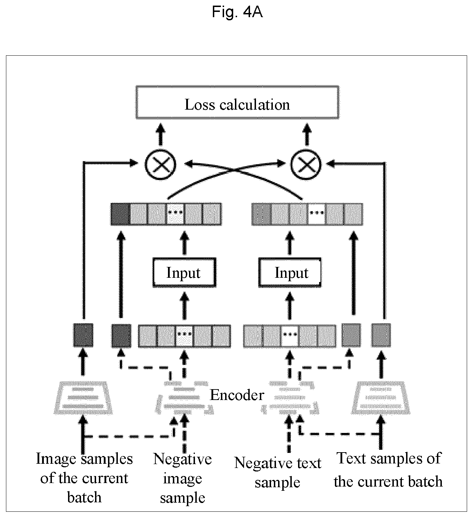

Fig. 4A is a schematic diagram of a queue module according to an embodiment of the present disclosure. As shown in Fig. 4A, the queue module of this embodiment includes an image feature queue and a text feature queue. The image feature queue is used for storing at least one feature of the image sample processed by an encoder, and the at least one feature can include at least one feature of negative image sample and at least one image feature of image sample in a current batch. The text feature queue is used for storing at least one feature of the text sample processed by an encoder, and the at least one feature can include at least one feature of negative text sample and at least one text feature of text sample in a current batch. Optionally, the image feature queue and the at least one text feature in the current batch form negative samples, and the text feature queue and the at least one image feature in the current batch form negative samples. The negative samples participate in the loss calculation. In this way, the number of negative samples can be greatly increased, thus the training speed and at least one training indicator of the initialization model are improved.

The contrastive learning model of this embodiment may mainly use InfoNCE loss, a calculation formula of which is as follows:

$$loss = -log\left(\frac{exp(x_i)}{\sum_j exp(x_j)}\right)$$

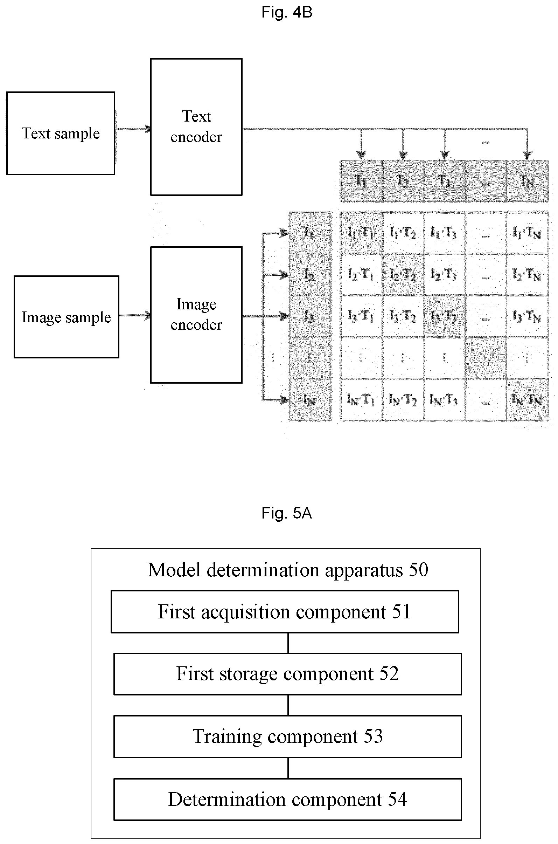

wherein $x_i$ is used for representing a probability that a network output result belongs to an $i^{th}$ class; and $x_j$ is used for representing a probability that the network output result belongs to a $j^{th}$ class. The above $exp(x_j)$ can be used for representing at least one match result indicating that the at least one image feature and the at least one text feature are matched successfully, and $\sum_j exp(x_j)$ can be used for representing at least one match result indicating that the at least one image feature and the at least one text feature are matched unsuccessfully. As shown in Fig. 4B, Fig. 4B is a schematic diagram of matching between at least one image feature and at least one text feature according to an embodiment of the present disclosure. As shown in Fig. 4, image features $I_1, I_2, ...., I_N$ are extracted from an input image sample through an image encoder, and text features $T_1, T_2, ..., T_N$ are extracted from an input text sample through a text encoder. Matching is performed on the image features $I_1, I_2, ...., I_N$ and the text features $T_1, T_2, ..., T_N$ to obtain match results. The match results on the diagonal represent that the text features and the image features are matched successfully, and the match results beyond the diagonals represent that the text features and the image features are matched unsuccessfully.

The InfoNCE loss of this embodiment and the above queue module are equivalent to increasing the number of the negative samples, and the at least one training indicator of the initialization model can be improved.

The pre-training of this embodiment uses the image-text pre-training optimization method based on the queue-technology. Two queues are used to respectively store the at least one image feature of the image sample and the at least one text feature of the text sample for calculation of infonceNCEloss. It should be noted that in this embodiment, after the image and text dual queues being added, which is equivalent to adding the negative samples of infoNCEloss, lots of computing resources are saved, and the at least one model indicator of the initialization model can be improved.

An embodiment of the present disclosure further provides a model determination apparatus configured for implementing the model determination method of the embodiment shown in Fig. 1A.

Fig. 5A is a schematic diagram of a model determination apparatus according to an embodiment of the present disclosure. As shown in Fig. 5A, the model determination apparatus 50 may include: a first acquisition component 51, a first storage component 52, a training component 53 and a determination component 54.

The first acquisition component 51 is configured to acquire an image sample and a text sample, wherein text data in the text sample is used for performing text description to target image data in the image sample.

The first storage component 52 is configured to store at least one image feature in the image sample to a first queue, and store at least one text feature in the text sample to a second queue.

The training component 53 is configured to train the first queue and the second queue to obtain a first target model.

The determination component 54 is configured to determine the first target model as an initialization model for a second target model.

Optionally, the training component includes: a determination module configured to determine multiple negative samples based on the first queue and the second queue; and a training module configured to train the multiple negative samples to obtain the first target model.

Optionally, the multiple negative samples include a first negative sample and the second negative sample. The determination module includes: a first determination submodule configured to determine a first negative sample based on the first queue and the at least one text feature; and a second determination submodule configured to determine a second negative sample based on the second queue and the at least one image feature.

Optionally, the first determination submodule is configured to determine the first negative sample based on the first queue and the at least one text feature through the following step: the first negative sample is determined based on the first queue and the at least one text feature of a current batch sample in the text sample.

Optionally, the second determination submodule is configured to determine the second negative sample based on the second queue and the at least one image feature through the following step: the second negative sample is determined based on the second queue and the at least one image feature of a current batch sample in the text sample.

Optionally, the training module includes: a matching submodule configured to matche the multiple image features with multiple text features in the negative sample to obtain multiple match results and multiple unmatch results, wherein each of the multiple match results include at least one image feature and at least one text feature which are matched with each other successfully, and each of the multiple unmatch results include at least one image feature and at least one text feature which are matched with each other unsuccessfully; a third determination submodule configured to determine at least one model parameter based on the plurality of match results and the plurality of unmatch results; and a fourth determination submodule configured to determine the first target model based on the at least one model parameter.

Optionally, the image sample includes noisy image data and/or the text sample includes noisy text data.

Optionally, the image sample is an unlabeled image sample and/or the text sample is an unlabeled text sample.

An embodiment of the present disclosure further provides a model determination apparatus configured for implementing the model determination method of the embodiment shown in Fig. 1B.

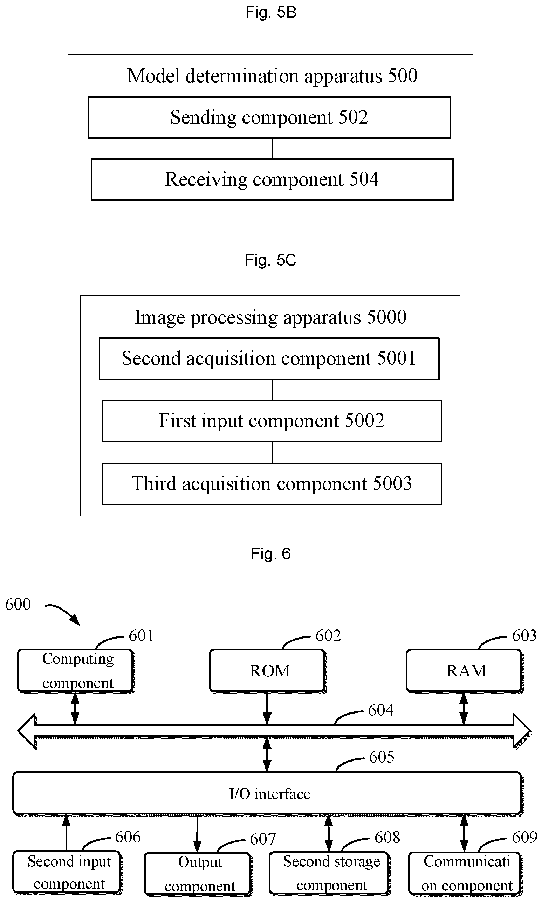

Fig. 5B is a schematic diagram of another model determination apparatus according to an embodiment of the present disclosure. As shown in Fig. 5B, the model determination apparatus 500 may include: a sending component 502 and a receiving component 504.

The sending component 502 is configured to send a model training request to a server, wherein the model training request includes an image sample and a text sample, and text data in the text sample is used for performing text description to target image data in the image sample.

The receiving component 504 is configured to receive an initialization model sent by the server in response to the model training request, wherein the initialization model is obtained by the server that stores at least one image feature in the image sample to a first queue, stores at least one text feature in the text sample to a second queue and trains the first queue and the second queue.

An embodiment of the present disclosure further provides an image processing apparatus configured for implementing the image processing method of the embodiment shown in Fig. 1C.

Fig. 5C is a schematic diagram of an image processing apparatus according to an embodiment of the present disclosure. As shown in Fig. 5C, the image processing apparatus 5000 may include: a second acquisition component 5001, a first input component 5002 and a third acquisition component 5003.

The second acquisition component 5001 is configured to acquire at least one image to be processed.

The first input component 5002 is configured to input the at least one image to be processed into a second target model, wherein the second target model is obtained by the model determination method of the embodiment of the present disclosure.

The third acquisition component 5003 is configured to acquire a processing result of the second target model.

In this embodiment, the pre-training of this embodiment adopts two queues to respectively store the at least one image feature and the at least one text feature and applies the two queues to train the initialization model, so that lots of computing resources can be saved, the technical problem of low efficiency of training of the initialization model is solved, and the technical effect of improving the efficiency of training of the initialization model is achieved.

It should be noted that all the above components and modules can be implemented by software or hardware. For the latter, they can be implemented by the following methods, but are not limited to this. The above-mentioned components and modules are all located in a same processor, or the above-mentioned modules are respectively located in different processors in any combination form.

In the technical solutions of the present disclosure, acquisition, storage, application, and the like of the user's personal information involved are all in compliance with the provisions of relevant laws and regulations, and do not violate public order and good customs.

According to an embodiment of the present disclosure, the present disclosure further provides an electronic device. The electronic device may include at least one processor; and a memory in communication connection with the at least one processor, wherein the memory stores an instruction that is able to be executed by the at least one processor; and the instruction, when executed by the at least one processor, causes the at least one processor to implement the model determination method of the embodiment of the present disclosure.

Optionally, the above-mentioned electronic device may further include a transmission device and an input/output device. The transmission device is connected to the above-mentioned processor, and the input/output device is connected to the above-mentioned processor.

According to an embodiment of the present disclosure, the present disclosure further provides a non-transitory computer-readable storage medium which stores a computer instruction, wherein the computer instruction is used for causing a computer to implement the model determination method of the embodiment of the present disclosure.

Optionally, in this embodiment, the above-mentioned non-transitory storage medium may be configured for storing a computer program used for executing the following steps:

S1, an image sample and a text sample are acquired, wherein text data in the text sample is used for performing text description to target image data in the image sample;

S2, at least one image feature in the image sample is stored to a first queue, and at least one text feature is stored in the text sample to a second queue;

S3, the first queue and the second queue are trained to obtain a first target model;

S4, the first target model is determined as an initialization model for a second target model.

Optionally, in this embodiment, the above-mentioned non-transitory storage medium may also be configured for storing a computer program used for executing the following steps:

S1, a model training request is sent to a server, wherein the model training request includes an image sample and a text sample, and text data in the text sample is used for performing text description to target image data in the image sample;

S2, an initialization model sent by the server is received in response to the model training request, wherein the initialization model is obtained by the server that stores at least one image feature in the image sample to a first queue, stores at least one text feature in the text sample to a second queue,

and trains the first queue and the second queue.

Optionally, in this embodiment, the above-mentioned non-transitory storage medium may also be configured for storing a computer program used for executing the following steps:

S1, at least one image to be processed is acquired;

S2, the at least one image to be processed is input into a second target model, wherein the second target model is obtained by the model determination method of the embodiment of the present disclosure;

S3, a processing result of the second target model is acquired.

Optionally, in this embodiment, the above-mentioned non-transitory computer-readable medium may include, but is not limited to, an electronic, magnetic, optical, electromagnetic, infrared, or semiconductor system, apparatus, or device, or any suitable combination of the above contents. More specific examples of the non-transitory computer-readable medium would include an electrical connection based on one or more wires, a portable computer disk, a hard disk, a random access memory (RAM), a read only memory (ROM), an erasable programmable read-only memory (EPROM or flash memory), an optical fiber, a portable compact disk read-only memory (CD-ROM), an optical storage device, a magnetic storage device, or any suitable combination of the above.

According to an embodiment of the present disclosure, the present disclosure further provides a computer program product, including a computer program which, when executed by a processor, implements the following steps:

S1, an image sample and a text sample are acquired, wherein text data in the text sample is used for performing text description to target image data in the image sample;

S2, at least one image feature in the image sample is stored to a first queue, and at least one text feature is stored in the text sample to a second queue;

S3, the first queue and the second queue are trained to obtain a first target model;

S4, the first target model is determined as an initialization model for a second target model.

Optionally, the above-mentioned computer program, when executed by the processor, can also implement the following steps:

S1, a model training request is sent to a server, wherein the model training request includes an image sample and a text sample, and text data in the text sample is used for performing text description to target image data in the image sample;

S2, an initialization model sent by the server is received in response to the model training request, wherein the initialization model is obtained by the server that stores at least one image feature in the image sample to a first queue, stores at least one text feature in the text sample to a second queue, and trains the first queue and the second queue.

Optionally, the above-mentioned computer program, when executed by the processor, can also implement the following steps:

S1, at least one image to be processed is acquired;

S2, the at least one image to be processed is input into a second target model, wherein the second target model is obtained by the model determination method of the embodiment of the present disclosure;

S3, a processing result of the second target model is acquired.

Optionally, for specific examples in this embodiment, reference may be made to the examples described in the foregoing embodiments and optional implementations, and details are not described herein again in this embodiment.

Program codes used for implementing the model determination method of the present disclosure can be written in any combination of at least one programming language. Program codes can be provided to at least one processor or at least one controller of at least one general-purpose computer, at least one special-purpose computer, or other at least one programmable model determination apparatus, so that when the program codes are executed by the at least one processor or at least one controller, the functions specified in the flow charts and/or block diagrams are implemented. The program codes can be entirely or partly executed on a machine, partly executed on the machine as an independent software package, and partly executed on a remote machine, or entirely executed on the remote machine or a server.

Fig. 6 is a schematic block diagram of an electronic device according to an embodiment of the present disclosure. The electronic device aims to represent various types of digital computers, such as a laptop computer, a desktop computer, a workstation, a personal digital assistant, a server, a blade server, a mainframe computer, and other suitable computers. The electronic device may also represent various forms of mobile devices, such as personal digital processing, a cellular phone, a smart phone, a wearable device, and other similar computing devices. The components shown herein, their connections and relationships, and their functions are merely examples, and are not intended to limit the implementation of the present disclosure described and/or required herein.

As shown in Fig. 6, the device 600 includes a computing component 601, which can execute various appropriate actions and processing according to computer programs that are stored in a ROM 602 or computer programs loaded from a second storage component 608 into a RAM 603. Various programs and data required for operations of the electronic device 600 are also stored in the RAM 603. The computing component 601, the ROM 602, and the RAM 603 are connected by means of a bus 604. An input/output (I/O) interface 605 is also connected to the bus 604.

Various components in the device 600 are connected to the I/O interface 605, which includs: a second input component 606, such as a keyboard and a mouse; an output component 607, such as various types of displays and speakers; a second storage component 608, such as a magnetic disk and an optical disk; and a communication component 609, such as a network card, a modem, and a wireless communication transceiver. The communication component 609 allows the device 600 to exchange information/data with other devices through a computer network such as the Internet and/or various telecommunication networks.

The Computing component 601 may be various general-purpose and/or special-purpose processing components with processing and computing capabilities. Some examples of the Computing component 601 include, but are not limited to, a central processing unit (CPU), a graphics processing unit (GPU), various dedicated artificial intelligence (AI) computing chips, various Computing components that run machine learning model algorithms, a digital signal processing (DSP), and any appropriate processor, controller, microcontroller, etc. The Computing component 601 executes the various methods and processing described above, for example, the model determination method. For example, in some embodiments, the model determination method may be implemented as a computer software program, which is tangibly contained in a machine-readable medium, such as the second storage component 608. In some embodiments, part or all of the computer programs may be loaded and/or installed on the device 600 via the ROM 602 and/or the communication component 609. When the computer program is loaded to the RAM 603 and executed by the Computing component 601, at least one step of the model determination method described above can be executed. Alternatively, in other embodiments, the Computing component 601 may be configured for executing the model determination method in any other suitable manner (for example, by means of firmware).

Various implementation modes of the systems and technologies described herein can be implemented in a digital electronic circuit system, an integrated circuit system, a field programmable gate arrays (FPGA), an application specific integrated circuit (ASIC), an application-specific standard product (ASSP), a system-on-chip (SOC), a complex programmable logic device (CPLD), computer hardware, firmware, software, and/or their combination. These various implementations may include: being implemented in at least one computer program. The at least one computer program may be executed and/or interpreted on a programmable system including at least one programmable processor. The programmable processor may be a dedicated or general-purpose programmable processor that can receive data and instructions from the storage system, at least one input device, and at least one output device, and transmit the data and the instructions to the storage system, the at least one input device, and the at least one output device.

The program codes used to implement the method of the present disclosure can be written in any combination of at least one programming language. These program codes can be provided to at least one processor or at least one controller of at least one general-purpose computer, at least one special-purpose computer, or other at least one programmable model determination apparatus, so that when the program codes are executed by the at least one processor or the at least one controller, the functions specified in the flow charts and/or block diagrams are implemented. The program codes can be entirely or partly executed on the machine, partly executed on the machine as an independent software package, and partly executed on a remote machine, or entirely executed on the remote machine or a server.

In the context of the present disclosure, a machine-readable medium may be a tangible medium, which may contain or store at least one program for using by the instruction execution system, apparatus, or device or combination with the instruction execution system, apparatus, or device. The machine-readable medium may be a machine-readable signal medium or a machine-readable storage medium. The machine-readable medium may include, but is not limited to, an electronic, magnetic, optical, electromagnetic, infrared, or semiconductor system, apparatus, or device, or any suitable combination of the above. More specific examples of the machine-readable storage medium would include an electrical connection based on at least one wires, a portable computer disk, a hard disk, a RAM, a ROM, an erasable programmable read-only memory (EPROM or flash memory), an optical fiber, a portable compact disk read-only memory (CD-ROM), an optical storage device, a magnetic storage device, or any suitable combination of the above.

In order to provide interaction with users, the systems and technologies described here can be implemented on a computer that has: a display apparatus for displaying information to the users (for example, a cathode ray tube (CRT) or a liquid crystal display (LCD) monitor); and a keyboard and a pointing apparatus (such as a mouse or a trackball) through which the users can provide inputs to the computer. Other types of devices can also be used to provide interaction with the user. For example, a feedback provided to the user can be any form of sensory feedback (for example, visual feedback, auditory feedback, or tactile feedback), and the inputs from the user can be received in any form (including sound input, speech input, or tactile input).

The systems and technologies described herein can be implemented in a computing system that includes a background component (for example, as a data server), or a computing system that includes a middleware component (for example, an application server), or a computing system that includes a front-end component (for example, a user computer with a graphical user interface or a web browser through which the user can interact with the implementation mode of the system and technologies described herein), or a computing system that includes any combination of the background component, the middleware component, or the front-end component. The components of the system can be connected to each other through any form or medium of digital data communication (for example, a communication network). Examples of communication networks include: a local area network (LAN), a wide area network (WAN), and an Internet.

The computer system can include at least one client and at least one server. The at least one client and the at least one server are generally far away from each other and usually interact through a communication network. A relationship between the at least one client and the at least one server is generated by at least one computer program running on corresponding at least one computer and having a client-server relationship with each other. The server can be a cloud server or a server of a distributed system or a server combined with a blockchain.

It should be understood that the various forms of flows shown above can be used to reorder, add or delete steps. For example, the steps described in the present disclosure may be executed in parallel, sequentially or in a different order, as long as the desired results of the technical solutions disclosed in the present disclosure can be achieved. This is not limited herein.

The above-mentioned specific implementations do not constitute a limitation on the protection scope of the present disclosure. Those skilled person in the art should understand that various modifications, combinations, sub-combinations and substitutions may occur depending on design requirements and other factors. Any modification, equivalent replacement and improvement made within the spirit and principle of the present disclosure shall all fall within the protection scope of the present disclosure.

## Claims

1. A model determination method, comprising:

acquiring (S102) an image sample and a text sample, wherein text data in the text sample is used for performing text description to target image data in the image sample;

storing (S104) at least one image feature in the image sample to a first queue, and storing at least one text feature in the text sample to a second queue;

training (S106) the first queue and the second queue to obtain a first target model; and determining (S108) the first target model as an initialization model for a second target model.

2. The method as claimed in claim 1, wherein the training the first queue and the second queue to obtain a first target model comprises:

determining a plurality of negative samples based on the first queue and the second queue; and training the plurality of negative samples to obtain the first target model.

3. The method as claimed in claim 2, wherein the plurality of negative samples comprises a first negative sample and a second negative sample, wherein determining the plurality of negative sample based on the first queue and the second queue comprises:

determining the first negative sample based on the first queue and the at least one text feature; and

determining the second negative sample based on the second queue and the at least one image feature.

4. The method as claimed in claim 3, wherein the determining the first negative sample based on the first queue and the text features comprises:
determining the first negative sample based on the first queue and the at least one text feature of a current batch sample in the text sample.

5. The method as claimed in claim 3, wherein the determining the second negative sample based on the second queue and the image features comprises:
determining the second negative sample based on the second queue and the at least one image feature of a current batch sample in the image sample.

6. The method as claimed in claim 2, wherein the training the negative sample to obtain the first target model comprises:

matching a plurality of image features with a plurality of text features in the negative sample to obtain a plurality of match results and a plurality of unmatch results, wherein each of the plurality of match results comprise at least one image feature and at least one text feature which are matched with each other successfully, and each of the plurality of unmatch results comprise at least one image feature and at least one text feature which are matched with each other unsuccessfully;

determining at least one model parameter based on the plurality of match results and the plurality of unmatch results; and

determining the first target model based on the at least one model parameter.

7. The method as claimed in any one of claims 1 to 6, wherein the image sample comprises noisy image data and/or the text sample comprises noisy text data.

8. The method as claimed in any one of claims 1 to 6, wherein the image sample is an unlabeled image sample and/or the text sample is an unlabeled text sample.

9. An image processing method, comprising:

acquiring (S10002) at least one image to be processed;

inputting (S10004) the at least one image to be processed into a second target model, wherein the second target model is obtained by the model determination method according to any one of claims 1 to 8; and

acquiring (S10006) a processing result of the second target model.

10. A model determination apparatus (50), comprising:

a first acquisition component (51) configured to acquire an image sample and a text sample, wherein text data in the text sample is used for performing text description to target image data in the image sample;

a first storage component (52) configured to store at least one image feature in the image sample to a first queue, and store at least one text feature in the text sample to a second queue;

a training component (53) configured to train the first queue and the second queue to obtain a first target model; and

a determination component (54) configured to determine the first target model as an initialization model for a second target model.

11. The apparatus according to claim 10, wherein the training component comprises:

a determination module configured to determine a plurality of negative samples based on the first queue and the second queue; and

a training module configured to train the plurality of negative samples to obtain the first target model.

12. The apparatus according to claim 11, wherein the plurality of negative samples comprise a first negative sample and a second negative sample, wherein the determination module comprises:

   a first determination submodule configured to determine the first negative sample based on the first queue and the at least one text feature; and
   a second determination submodule configured to determine the second negative sample based on the second queue and the at least one image feature.

13. The apparatus according to claim 12, wherein the first determination submodule is configured to determine the first negative sample based on the first queue and the at least one text feature through the following step:
   determining the first negative sample based on the first queue and the at least one text feature of a current batch sample in the text sample.

14. The apparatus according to claim 12, wherein the second determination submodule is configured to determine the second negative sample based on the second queue and the at least one image feature through the following step:
   determining the second negative sample based on the second queue and the at least one image feature of a current batch sample in the image sample.

15. The apparatus according to claim 11, wherein the training module comprises:

   a matching submodule configured to match a plurality of image features with a plurality of text features in the negative sample to obtain a plurality of match results and a plurality of unmatch results, wherein each of the plurality of match results comprise at least one image feature and at least one text feature which are matched with each other successfully, and each of the plurality of unmatch results comprise at least one image feature and at least one text feature which are matched with each other unsuccessfully;
   a third determination submodule configured to determine at least one model parameter based on the plurality of match results and the plurality of unmatch results; and
   a fourth determination submodule configured to determine the first target model based on the at least one model parameter.

16. An image processing apparatus (5000), comprising:

a second acquisition component (5001) configured to acquire at least one image to be processed;
a first input component (5001) configured to input the at least one image to be processed into a second target model, wherein the second target model is obtained by the model determination method according to any one of claims 1 to 8; and
a third acquisition component (5003) configured to acquire a processing result of the second target model.

17. An electronic device, comprising

   at least one processor; and
   a memory in communication connection with the at least one processor, wherein
   the memory stores an instruction that is able to be executed by the at least one processor; the instruction, when executed by the at least one processor, causes the at least one processor to implement the method according to any one of claims 1 to 9.

18. A non-transitory computer-readable storage medium storing a computer instruction, wherein the computer instruction is used for causing a computer to implement the method according to any one of claims 1 to 9.

19. A computer program product, comprising a computer program which, when executed by a processor, implements the method according to any one of claims 1 to 9.

Fig. 1A

| An image sample and a text sample are acquired, wherein text data in the text sample is used for performing text description to target image data in the image sample | S102 |

| At least one image feature in the image sample are stored to a first queue, and at least one text feature in the text sample are stored to a second queue | S104 |

| The first queue and the second queue are trained to obtain a first target model | S106 |

| The first target model is determined as an initialization model for a second target model | S108 |

Fig. 1B

| A model training request is sent to a server, wherein the model training request includes an image sample and a text sample, and text data in the text sample is used for performing text description to target image data in the image sample | S1002 |

| An initialization model sent by the server in response to the model training request is received, wherein the initialization model is obtained by the server that stores at least one image feature in the image sample to a first queue, stores at least one text feature in the text sample to a second queue, and trains the first queue and the second queue | S1004 |

Fig. 1C

At least one image to be processed is acquired — S10002

The least one image to be processed is input into a second target model, wherein the second target model is obtained by the model determination method of the embodiment of the present disclosure — S10004

A processing result of the second target model is acquired — S10006

Fig. 2

Contrastive learning model

Text feature queue

Image feature queue

Text encoder

Image encoder

Image sample and text sample

Fig. 3

Output result

Class token  Patch token  Distinguish token

Fig. 4A

Fig. 4B

Fig. 5A

Fig. 5B

Model determination apparatus 500

Sending component 502

Receiving component 504

Fig. 5C

Image processing apparatus 5000

Second acquisition component 5001

First input component 5002

Third acquisition component 5003

Fig. 6

600

601 Computing component

602 ROM

603 RAM

604

605

I/O interface

606 Second input component

607 Output component

608 Second storage component

609 Communication component

**EP 4 167 137 A1**

Europäisches Patentamt
European Patent Office
Office européen des brevets

# EUROPEAN SEARCH REPORT

Application Number

EP 22 18 1294

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | LI WEI ET AL: "UNIMO: Towards Unified-Modal Understanding and Generation via Cross-Modal Contrastive Learning", PROCEEDINGS OF THE 59TH ANNUAL MEETING OF THE ASSOCIATION FOR COMPUTATIONAL LINGUISTICS AND THE 11TH INTERNATIONAL JOINT CONFERENCE ON NATURAL LANGUAGE PROCESSING (VOLUME 1: LONG PAPERS), [Online] 20 May 2021 (2021-05-20), pages 2592-2607, XP055915827, Stroudsburg, PA, USA DOI: 10.18653/v1/2021.acl-long.202 Retrieved from the Internet: URL:https://arxiv.org/pdf/2012.15409v3.pdf > [retrieved on 2022-12-02] * abstract * * page 2 - page 8 * * page 13 - page 15 * | 1-19 | INV. G06N3/04 G06N3/08 |
| A | WEN KEYU ET AL: "COOKIE: Contrastive Cross-Modal Knowledge Sharing Pre-training for Vision-Language Representation", 2021 IEEE/CVF INTERNATIONAL CONFERENCE ON COMPUTER VISION (ICCV), IEEE, 10 October 2021 (2021-10-10), pages 2188-2197, XP034092283, DOI: 10.1109/ICCV48922.2021.00221 [retrieved on 2022-02-10] * the whole document * | 1-19 | TECHNICAL FIELDS SEARCHED (IPC) G06N |
| A | CN 113 240 056 A (BEIJING BAIDU NETCOM SCI & TECH CO LTD) 10 August 2021 (2021-08-10) * the whole document * | 1-19 | |

The present search report has been drawn up for all claims

| Place of search | Date of completion of the search | Examiner |
|---|---|---|
| The Hague | 6 December 2022 | Tsakonas, Athanasios |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

22

## ANNEX TO THE EUROPEAN SEARCH REPORT
## ON EUROPEAN PATENT APPLICATION NO.

EP 22 18 1294

This annex lists the patent family members relating to the patent documents cited in the above-mentioned European search report.
The members are as contained in the European Patent Office EDP file on
The European Patent Office is in no way liable for these particulars which are merely given for the purpose of information.

06-12-2022

| Patent document cited in search report | | Publication date | Patent family member(s) | | Publication date |
|---|---|---|---|---|---|
| CN 113240056 | A | 10-08-2021 | CN | 113240056 A | 10-08-2021 |
| | | | JP | 2022137145 A | 21-09-2022 |
| | | | US | 2022327809 A1 | 13-10-2022 |

EPO FORM P0459

For more details about this annex : see Official Journal of the European Patent Office, No. 12/82